(19) Europäisches Patentamt
European Patent Office
Office européen des brevets

(11) **EP 3 034 833 A1**

(12) **EUROPEAN PATENT APPLICATION**

(43) Date of publication:
**22.06.2016 Bulletin 2016/25**

(51) Int Cl.:
***F02C 3/107*** *(2006.01)*　　　***F02K 3/075*** *(2006.01)*

(21) Application number: **15200058.4**

(22) Date of filing: **15.12.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **16.12.2014 US 201414571737**<br><br>(71) Applicant: **United Technologies Corporation Farmington, CT 06032 (US)** | (72) Inventors:<br>• **KUPRATIS, Daniel Bernard**<br>　**Wallingford, CT Connecticut 06492 (US)**<br>• **HASEL, Karl L.**<br>　**Manchester, CT Connecticut 06040 (US)**<br><br>(74) Representative: **Hull, James Edward**<br>**Dehns**<br>**St. Bride's House**<br>**10 Salisbury Square**<br>**London**<br>**EC4Y 8JD (GB)** |

(54) **TURBINE ENGINE INCLUDING BALANCED LOW PRESSURE STAGE COUNT**

(57)　A turbine engine (20) includes a compressor section (24) having a high pressure portion (52) and a low pressure portion (44) and a turbine section (28), having a low pressure portion (46) and a high pressure portion (54). A ratio of low pressure portion stages (132) to low pressure compressor portion stages (130) is less than or equal to 1.

FIG.2A

EP 3 034 833 A1

**Description**

**TECHNICAL FIELD**

The present disclosure relates generally to turbofan engines, and more particularly to a balanced stage count in a turbofan engine having a high bypass ratio.

**BACKGROUND OF THE INVENTION**

Turbine engines, such as those used in commercial aircraft, typically include a large fan on a fore end of the turbine engine gas path. Air drawn through the fan is either directed into the gas path of the turbine engine or provided to a bypass path that bypasses the turbine engine gas path. The ratio of air bypassing the turbine engine gas path to air entering the turbine engine gas path is referred to as the engine bypass ratio, or alternatively as the bypass ratio. As the turbine engine fan increases in size, the bypass ratio typically undergoes a corresponding increase.

In existing turbine engines, an increase in bypass ratio typically requires that the turbine portion of the turbine engine have a corresponding increase in stage count. That is, the higher the bypass ratio in existing turbine engines, the higher the number of low pressure turbine stages that are required for operation of the turbine engine. The increased number of low pressure turbine stages increases the ratio of low pressure turbine stages to low pressure compressor stages, and increases the weight of the engine.

**SUMMARY OF THE INVENTION**

A turbine engine according to an exemplary embodiment of this disclosure, among other possible things includes a fan, a compressor section having at least a first portion and a second portion, the first portion is at a high pressure relative to the second portion, a combustor in fluid communication with the compressor section, a turbine section in fluid communication with the combustor, the turbine section includes at least a first portion and a second portion and the first portion is at a high pressure relative to the second portion, each of the compressor section second portion and the turbine section second portion include a plurality of stages, a ratio of turbine section second portion stages to compressor section second portion stages is less than or equal to 1, and a fan bypass ratio of the turbine engine is greater than or equal to 11.

In a further embodiment of the foregoing turbine engine, a configuration complexity metric of the low pressure compressor and low pressure turbine $=[1+N][1+[1/Nx(S_{LPT})+Nx(S_{LPT})]]/[N+(S_{LPC})/(S_{LPT})]/[2N]$ where, $S_{LPT}$ is the number of turbine second portion stages, $S_{LPC}$ is the number of compressor second portion stages, $S_{LPC}/S_{LPT}$ is a reciprocal of the ratio of the number of turbine second portion stages to the number of compressor second portion stages and N is approximately 1.618034.

In a further embodiment of the foregoing turbine engine, the configuration complexity metric of the low pressure compressor and low pressure turbine is in the range of 2.63 to 4.27.

In a further embodiment of the foregoing turbine engine, the ratio of turbine section second portion stages to compressor section second portion stages is approximately 0.8.

In a further embodiment of the foregoing turbine engine, the turbine section second portion includes four stages and the compressor section second portion includes five stages.

In a further embodiment of the foregoing turbine engine, the turbine section second portion includes a number of stages in the range of 3 to 5 and the compressor section second portion includes a number of stages in the range of 5 to 7.

In a further embodiment of the foregoing turbine engine, the turbine engine has a fan bypass ratio in the range of 11 to 17.

In a further embodiment of the foregoing turbine engine, the turbine engine has a fan bypass ratio in the range of 11.6 to 15.

In a further embodiment of the foregoing turbine engine, said turbine engine has a fan bypass ratio of approximately 11.7.

A turbine engine according to an exemplary embodiment of this disclosure, among other possible things includes a fan, a compressor section having at least a first portion and a second portion, the first portion is at a high pressure relative to the second portion, a turbine section in fluid communication with the compressor, the turbine section includes at least a first portion and a second portion and the first portion is at a high pressure relative to the second portion, each of the compressor section second portion and the turbine section second portion include a plurality of stages, a core flow path defined at least by the compressor section and the turbine section, a bypass flow path bypassing the core flow path, a fan bypass ratio is defined as a ratio of air passing through the fan and entering the bypass flow path to air passing through the fan and entering the core flow path, a ratio of turbine section second portion stages to compressor section second portion stages is less than or equal to 1, and a fan bypass ratio of the turbine engine is greater than or equal to 11.

In a further embodiment of the foregoing turbine engine, a configuration complexity metric of the low pressure compressor and low pressure turbine $=[1+N][1+[1/Nx(S_{LPT})+Nx(S_{LPC})]]/[N+(S_{LPC})/(S_{LPT})]/[2N]$ where, $S_{LPT}$ is the number of turbine second portion stages, $S_{LPC}$ is the number of compressor second portion stages, $S_{LPC}/S_{LPT}$ is a reciprocal of the ratio of the number of turbine second portion stages to the number of compressor second portion stages, and N is approximately 1.618034.

In a further embodiment of the foregoing turbine engine, a configuration complexity metric of the low pressure compressor and low pressure turbine is in the range of 2.63 to 4.27.

In a further embodiment of the foregoing turbine engine, the ratio of turbine section second portion stages to compressor section second portion stages is approximately 0.8.

In a further embodiment of the foregoing turbine engine, the turbine section second portion includes four stages and the compressor section second portion includes five stages.

In a further embodiment of the foregoing turbine engine, the turbine section second portion includes a number of stages in the range of 3 to 5 and the compressor section second portion includes a number of stages in the range of 5 to 7.

In a further embodiment of the foregoing turbine engine, the turbine engine has a fan bypass ratio in the range of 11 to 17.

In a further embodiment of the foregoing turbine engine, the turbine engine has a fan bypass ratio in the range of 11.6 to 15.

In a further embodiment of the foregoing turbine engine, the turbine engine has a fan bypass ratio of approximately 11.7.

In one exemplary embodiment, a turbine engine includes a fan, a compressor section having at least a first portion, a second portion, and a third portion, wherein the first portion is at a high pressure relative to the second portion, a combustor in fluid communication with the compressor section, a turbine section in fluid communication with the combustor, wherein the turbine section includes at least a first portion, a second portion, and a third portion and wherein the first portion is at a high pressure relative to the second portion, wherein the second portion of the turbine section comprises a low pressure turbine, and wherein the low pressure turbine drives the fan via an epicyclic gear train geared architecture and wherein the epicyclic geared architecture includes a speed reduction greater than about 2.3, wherein each of the compressor section second portion and the turbine section second portion include a plurality of stages, wherein a ratio of turbine section second portion stages to compressor section second portion stages is less than or equal to 1, wherein a configuration complexity metric of the compressor section second portion and turbine section second portion is defined by the relationship $[1+N][1+[1/Nx(S_{LPT})+Nx(S_{LPC})]]/[N+(S_{LPC})/(S_{LPT})]/[2N]$ where, $S_{LPT}$ is the number of turbine second portion stages, $S_{LPC}$ is the number of compressor second portion stages, $S_{LPC}/S_{LPT}$ is a reciprocal of the ratio of the number of turbine second portion stages to the number of compressor second portion stages, and N is approximately 1.618034 and is in the range of 2.63 to 4.27, and a fan bypass ratio of the turbine engine is greater than or equal to 11.

In one example A method for validating a gas turbine engine including determining a configuration complexity metric of a low pressure compressor and low pressure turbine in a gas turbine engine where a ratio of low pressure turbine stages to low pressure compressor stages is less than 1 by determining a weighted summation of a number of low pressure compressor stages and a number of low pressure turbine stages, wherein the complexity metric is defined as $[1+N][1+[1/Nx(S_{LPT})+Nx(S_{LPC})]]/[N+(S_{LPC})/(S_{LPT})]/[2N]$, where, $S_{LPT}$ is the number of low pressure turbine stages, $S_{LPC}$ is the number of low pressure compressor stages, and N is about 1.618034, and validating the gas turbine engine when the configuration complexity is in the range of about 2.63 to about 4.27.

These and other features of the present invention can be best understood from the following specification and drawings, the following of which is a brief description.

**BRIEF DESCRIPTION OF THE DRAWINGS**

Figure 1 schematically illustrates an example gas turbine engine.

Figure 2A schematically illustrates a low pressure compressor portion of the gas turbine engine of Figure 1 in a first example.

Figure 2B schematically illustrates the low pressure turbine portion of the gas turbine engine of Figure 1 in the first example.

Figure 3A schematically illustrates a low pressure compressor portion of the gas turbine engine of Figure 1 in a second example.

Figure 3B schematically illustrates a low pressure turbine portion of the gas turbine engine of Figure 1 in a second example.

Figure 4 schematically illustrates an example alternative gas turbine engine configuration.

**DETAILED DESCRIPTION OF AN EMBODIMENT**

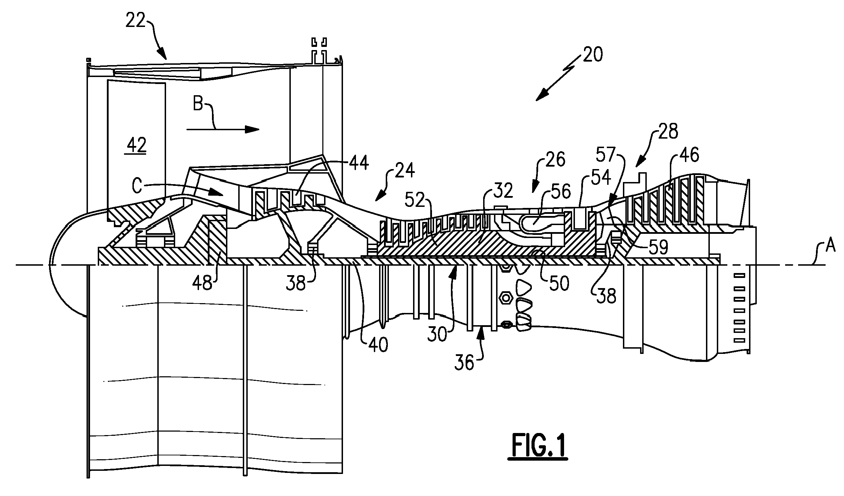

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core C flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion.

The engine 20 is in one example a high-bypass geared aircraft engine. In a further example, the engine 20 bypass ratio is greater than about eleven (11:1), with an example embodiment having a bypass ratio in the range of eleven (11:1) to seventeen (17:1), and a further example embodiment having a bypass ratio in the range of eleven and six tenths (11.6:1) to fifteen (15:1), and a further example embodiment being approximately eleven and seven tenths (11.7:1). The geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about eleven (11:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of $[(\text{Tram }°R) / (518.7 °R)]^{0.5}$. The "Low corrected fan tip speed" as disclosed herein according to one non-limiting embodiment is less than about 1150 ft / second (350.52 m/s).

Existing turbine engine models, such as direct drive turbine engines, increase the bypass ratio of the turbine engine by increasing the fan size, thereby increasing the amount of air that is drawn through the gas path of the turbine engine. The large fan size necessitates an increased number of low pressure turbine stages in order to drive the fan at sufficient speeds. The additional turbine stages result in a heavier turbine engine where the number of low pressure turbine stages exceeds the number of low pressure compressor stages.

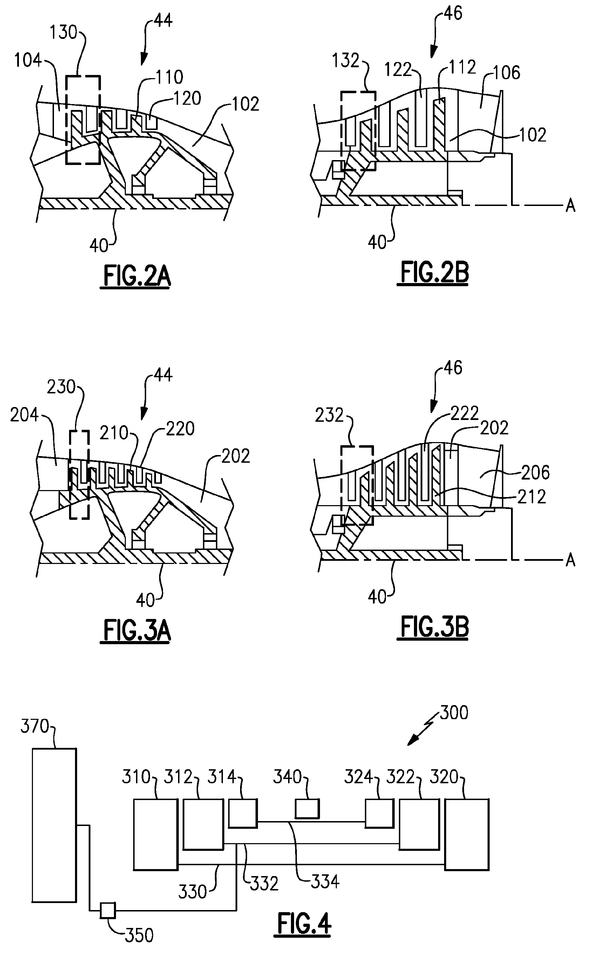

Figure 2A illustrates a low pressure compressor 44 as an isolated portion of an example turbine engine 20, such as the turbine engine 20 in Figure 1. Figure 2B illustrates a low pressure turbine 46 as an isolated section of the example turbine engine 20 of Figure 1. The low pressure compressor 44 defines a gas path 102 which is part of the core flow path C. Disposed within the gas path 102 of the low pressure section are multiple rotors 110 connected to the inner shaft 40. Each of the rotors 110 rotates with the inner shaft 40. Adjacent to each of the low pressure compressor rotors 110 is a static element, referred to as a low pressure compressor stator 120. Each low pressure compressor stator 120 is connected to a turbine engine frame and does not rotate about the engine central longitudinal axis A. Each pairing of a low pressure compressor stator 120 with a low pressure compressor rotor 110 is referred to as a low pressure compressor stage 130. The pairing comprises a low pressure compressor rotor 110 forward of a low pressure compressor stator 120. As can be appreciated from Figure 2A, the example low pressure compressor 44 includes three stages 130. The low compressor stator 120 alternatively may be a variable vane that controls the gas path flow. A vane 104 is disposed forward of the low pressure compressor stages 130, and conditions airflow entering the low pressure compressor 44.

The gas path 102 extends through the turbine engine 20 and into the low pressure turbine 46, as shown in Figure 2B. As with the low pressure compressor 44, the low pressure turbine 46 includes multiple rotors 112 disposed within the gas path 102 and connected to the inner shaft 40. The low pressure turbine rotors 112 rotate along with the inner shaft 40. Adjacent to each of the low pressure turbine rotors 112 is at least one low pressure turbine stator 122. The pairings of the low pressure turbine stators 122 and the low pressure turbine rotors 112 are referred to as low pressure turbine stages 132. Each pairing is a low pressure turbine stator 122 forward of a low pressure turbine rotor 112. The low pressure turbine section 46 illustrated in Figure 2B includes three low pressure turbine stages 132. The low pressure turbine stator 122 alternatively may be a variable vane that controls the gas path flow. A vane 106 is located at the exit of the gas path 102 and directs air and combustion gasses out the rear of the turbine engine 20.

The number of low pressure compressor stages 130 is identical to the number or low pressure compressor rotors 110. The number of low pressure turbine stages 132 is identical to the number of low pressure turbine rotors 112. The turbine engine 20 incorporating the low pressure compressor 44 and the low pressure turbine 46 illustrated in Figures 2A and 2B has a ratio of the number of low pressure turbine stages 132 to the number of low pressure compressor stages 130 of 3:3. In other words, the ratio defined by the low pressure turbine stage count compared to the low pressure compressor stage count in the example of Figures 2A and 2B is one (1).

Figure 3A illustrates an alternate low pressure compressor 44 as an isolated portion of the same example gas turbine engine 20, and Figure 3B illustrates an alternate low pressure turbine 46 as an isolated portion of the same example gas turbine engine 20. As with the examples of Figure 2A, the low pressure compressor 44 of Figure 3A includes multiple low pressure compressor rotors 210 disposed in a gas path 202. Paired with each of the low pressure compressor rotors 210 is a low pressure compressor stator 220 connected to the static frame of the turbine engine 20. The low pressure compressor rotors 210 are connected to the inner shaft 40 and rotate along with the shaft 40. Each of the low pressure compressor rotors 210 is paired with a stator 220 in a low pressure compressor stage 230. The pairing comprises a low pressure compressor rotor 210 forward of a low pressure compressor stator 220. The low compressor stator 220 alternatively may be a variable vane that controls the gas path flow. As can be appreciated from Figure 3A, the low pressure compressor 44 has a stage count of five low pressure compressor stages 230 in the example of Figure 3A. The number of low pressure compressor stages 230 is identical to the number or low pressure compressor rotors 210.

Figure 3B illustrates an alternate low pressure turbine 46 as an isolated portion of the same example gas turbine engine 20. As with the example of Figure 2B, the low pressure turbine 46 includes turbine rotors 212 connected to the inner shaft 40 and disposed in the gas path 202. Multiple low pressure turbine stators 222 are also disposed in the gas path 202 and each rotor 212 is paired with at least one low pressure turbine stator 222. Each pair of low pressure turbine rotors 212 and low pressure turbine stators 222 is a low pressure turbine stage 232. Each pairing is a low pressure turbine stator 222 forward of a low pressure turbine rotor 212. The low pressure turbine stator 222 alternatively may be a variable vane that controls the gas path flow. As can be appreciated from Figure 3B, the low pressure turbine 46 has a stage count of four low pressure turbine stages 232. A vane 206 is located at the exit of the gas path 202 and directs air and combustion gasses out the rear of the turbine engine 20. The number of low pressure turbine stages 232 is identical to the number of low pressure turbine rotors 212.

Thus, the example turbine engine 20 including the low pressure compressor portion 44 and the low pressure turbine portion 46 of Figures 3A and 3B has a ratio of low pressure turbine stages to low pressure compressor stages of 4:5. In other words, the ratio defined by the low pressure turbine stage count compared to the low pressure compressor stage count in the example of Figures 3A and 3B is 0.8.

In yet further alternate turbine engine configurations, the ratio of low pressure turbine stages 132, 232 to low pressure compressor stages 130, 230 can be anywhere in the range of 0.3 to about 0.9. In other words, alternate configurations can include ratios ranging from 1:3 or 2:6 or 3:9 to 4:5 or 6:7 or 7:8.

A set of examples of the number of low pressure compressor 44 stages and low pressure turbine 46 stages of the example gas turbine engine 20 is defined below in Table 1. Table 1 includes the combinations of the number of low pressure compressor 44 stages and low pressure turbine 46 stages, the ratio of low pressure turbine 46 stages to low pressure compressor 44 stages, the reciprocal of the ratio of low pressure turbine 46 stages to low pressure compressor 44 stages, the difference between the number of low pressure compressor 44 stages and low pressure turbine 46 stages, the sum of the number of low pressure compressor 44 stages and low pressure turbine 46 stages and a measure of the configuration complexity of the low pressure compressor 44 and low pressure turbine 46 in terms of a configuration complexity metric. The configuration complexity metric is defined as

$$\frac{[1+N][1+[1/Nx(S_{LPT})+Nx(S_{LPC})]]}{[N+(S_{LPC})/(S_{LPT})][2N]}$$

where, $S_{LPT}$ is the number of low pressure turbine 46 stages, $S_{LPC}$ is the number of low pressure compressor 44 stages, $S_{LPC}/S_{LPT}$ is the reciprocal of the ratio of the number of low pressure turbine 46 stages to the number of low pressure compressor 44 stages, and N = 1.618034, approximately. N also is known in mathematics as the "golden number" due to the relationship, N x [N - 1] = 1.

The configuration complexity metric includes a weighted summation of the number of low pressure 44 compressor stages and the number of low pressure turbine 46 stages where the weighting factors are the golden number and the reciprocal of the golden number.

A balanced stage count has one more low pressure compressor stage than low pressure turbine stage, expressed mathematically as $(S_{LPC})-(S_{LPT})=1$. The above equation is of the form $[1/(S_{LPT})]x[(S_{LPC})-1] = 1$. The configuration complexity metric balances the complexity of all low pressure compressor stages against the complexity of all low pressure turbine stages by applying weighting factors based on the golden number, N. The weighted sum of the stage counts of the low pressure compressor and low pressure turbine is defined as the sum of the stage count of the low pressure turbine, $(S_{LPT})$, multiplied by the reciprocal of the golden number, 1/N, plus the stage count of the low pressure compressor, $(S_{LPC})$, multiplied by the golden number, N. The simplest configuration of low pressure compressor and low pressure turbine has $(S_{LPC}) = 1$ and $(S_{LPT}) = 1$ and, therefore, $(S_{LPT})/(S_{LPC}) =1$ (one). In one example, the configurations of interest have $(S_{LPT})/(S_{LPC})$ less than or equal to 1 (one). The lowest value of the configuration complexity metric is set equal to 1 (one) by applying the factor $\{[1+N]/[2xN]\}$; see Table 1.

| Number of LPT Stages ($S_{LPT}$) | Number of LPC Stages ($S_{LPC}$) | Total Stages ($S_{LPC}$) - ($S_{LPT}$) | Total Stages ($S_{LPC}$) + ($S_{LPT}$) | Ratio ($S_{LPC}$):($S_{LPT}$) | Ratio ($S_{LPT}$):($S_{LPC}$) | Configuration Complexity Metric {1 + [1/N x ($S_{LPT}$) + N x ($S_{LPC}$)]} / {N + ($S_{LPC}$)/($S_{LPT}$)} x {[1 + N] / [2 x N]} |
|---|---|---|---|---|---|---|
| 8 | 9 | 1 | 17 | 1.125 | 0.889 | 6.04811 |
| 7 | 9 | 2 | 16 | 1.286 | 0.778 | 5.54117 |
| 7 | 8 | 1 | 15 | 1.143 | 0.875 | 5.35376 |
| 6 | 9 | 3 | 15 | 1.500 | 0.667 | 5.00000 |
| 6 | 8 | 2 | 14 | 1.333 | 0.750 | 4.83883 |
| 6 | 7 | 1 | 13 | 1.167 | 0.857 | 4.65836 |
| 5 | 9 | 4 | 14 | 1.800 | 0.556 | 4.41487 |
| **5** | **8** | **3** | **13** | **1.600** | **0.625** | **4.28248** |
| 5 | 7 | 2 | 12 | 1.400 | 0.714 | 4.13254 |
| 5 | 6 | 1 | 11 | 1.200 | 0.833 | 3.96131 |
| 4 | 9 | 5 | 13 | 2.250 | 0.444 | 3.77199 |
| 4 | 8 | 4 | 12 | 2.000 | 0.500 | 3.67082 |
| 4 | 7 | 3 | 11 | 1.750 | 0.571 | 3.55464 |
| 4 | 6 | 2 | 10 | 1.500 | 0.667 | 3.41982 |
| **4** | **5** | **1** | **9** | **1.250** | **0.800** | **3.26150** |
| 3 | 9 | 6 | 12 | 3.000 | 0.333 | 3.05112 |
| 3 | 8 | 5 | 11 | 2.667 | 0.375 | 2.98297 |
| 3 | 7 | 4 | 10 | 2.333 | 0.429 | 2.90333 |
| 3 | 6 | 3 | 9 | 2.000 | 0.500 | 2.80902 |
| 3 | 5 | 2 | 8 | 1.667 | 0.600 | 2.69556 |
| **3** | **4** | **1** | **7** | **1.333** | **0.750** | **2.55647** |
| 2 | 9 | 7 | 11 | 4.500 | 0.222 | 2.22133 |
| **2** | **8** | **6** | **10** | **4.000** | **0.250** | **2.18602** |
| 2 | 7 | 5 | 9 | 3.500 | 0.286 | 2.14382 |
| 2 | 6 | 4 | 8 | 3.000 | 0.333 | 2.09247 |
| 2 | 5 | 3 | 7 | 2.500 | 0.400 | 2.02866 |
| 2 | 4 | 2 | 6 | 2.000 | 0.500 | 1.94721 |
| 2 | 3 | 1 | 5 | 1.500 | 0.667 | 1.83964 |
| 1 | 9 | 8 | 10 | 9.000 | 0.111 | 1.23282 |
| **1** | **8** | **7** | **9** | **8.000** | **0.125** | **1.22490** |
| 1 | 7 | 6 | 8 | 7.000 | 0.143 | 1.21514 |
| 1 | 6 | 5 | 7 | 6.000 | 0.167 | 1.20282 |
| 1 | 5 | 4 | 6 | 5.000 | 0.200 | 1.18677 |
| 1 | 4 | 3 | 5 | 4.000 | 0.250 | 1.16501 |
| 1 | 3 | 2 | 4 | 3.000 | 0.333 | 1.13383 |
| 1 | 2 | 1 | 3 | 2.000 | 0.500 | 1.08541 |
| 1 | 1 | 0 | 2 | 1.000 | 1.000 | 1.00000 |

In alternate example configurations the low pressure compressor 44 and the low pressure turbine 46 have different values for the configuration complexity metric ranging from NxN = 2.634, approximately, to NxNxN = 4.262, approximately. While the ratio of the number of low pressure turbine 46 stages to the number of low pressure compressor 44 stages for various configurations (such as 1:2 and 2:4) may be the same but the configuration complexity metric is different, as the configuration complexity metric depends on the actual stage counts. No two distinct configurations comprising one low pressure compressor 44 and one low pressure turbine 46 and a second low pressure compressor 44 and a second low pressure turbine 46 have both the same ratio of the number of low pressure turbine 46 stages to the number of low pressure compressor 44 stages and the same configuration complexity metric.

With continued reference to the above configuration complexity metric calculation and validation, Figure 4 schematically illustrates an exemplary gas turbine engine 300 including a first compressor 310, a second compressor 312, and a third compressor 314. Each of the compressors is connected to a corresponding first turbine 320, second turbine 322 or third turbine 324 via a shaft 330, 332, 334. In the illustrated example turbine engine, the first compressor 310 is a lowest pressure compressor, the third compressor 314 is a highest pressure compressor, and the second compressor 312 has a pressure between that of the first compressor 310 and the third compressor 314. Similarly, the first turbine 320 is a lowest pressure turbine, the third turbine 324 is a highest pressure turbine, and the second turbine 322 has a pressure between the first turbine 320 and the third turbine 324.

Also included in the gas turbine engine 300 of Figure 4 is a combustor 340. The combustor 340 is in fluid communication with the compressors 310, 312, 314 and the turbines 320, 322, 324. The configuration complexity metric described above for a gas turbine engine having two compressors and two turbines can be applied in the same manner to a gas turbine engine 300 by identifying two compressors 310, 312, 314 with the higher pressure compressor being the "high pressure compressor" and the lower pressure compressor being the "low pressure compressor". The turbines 320, 322, 324 corresponding to the selected compressors are similarly used for the complexity metric calculation by identifying two turbines 320, 322, 324 with the higher pressure turbine being the "high pressure turbine" and the lower pressure turbine being the "low pressure turbine".

It is further understood that any of the above described concepts can be used alone or in combination with any or all of the other above described concepts. Although various embodiments of this invention have been disclosed, a worker of ordinary skill in this art would recognize that certain modifications would come within the scope of this invention. For that reason, the following claims should be studied to determine the true scope and content of this invention.

**Claims**

1. A turbine engine comprising:

   a fan;
   a compressor section having at least a first portion and a second portion, wherein said first portion is at a high pressure relative to said second portion;
   a combustor in fluid communication with the compressor section;
   a turbine section in fluid communication with the combustor, wherein said turbine section includes at least a first portion and a second portion, said first portion is at a high pressure relative to said second portion, each of said compressor section second portion and said turbine section second portion include a plurality of stages, and a ratio of turbine section second portion stages to compressor section second portion stages is less than or equal to 1;
   a core flow path defined at least by said compressor section and said turbine section; and
   a bypass flow path bypassing said core flow path, wherein a fan bypass ratio is defined as a ratio of air passing through said fan and entering said bypass flow path to air passing through said fan and entering said core flow path, and the fan bypass ratio of the turbine engine is greater than or equal to 11.

2. The turbine engine of claim 1, wherein a configuration complexity metric of

$$\text{the low pressure compressor and low pressure turbine } =$$

$$[1+N][1+[1/Nx(S_{LPT})+Nx(S_{LPC})]]/[N+(S_{LPC})/(S_{LPT})]/[2N]$$

   where, $S_{LPT}$ is the number of turbine second portion stages;
   $S_{LPC}$ is the number of compressor second portion stages;
   $S_{LPC}/S_{LPT}$ is a reciprocal of the ratio of the number of turbine second portion stages to the number of compressor second portion stages; and
N is approximately 1.618034.

3. The turbine engine of claim 2, wherein the configuration complexity metric of the low pressure compressor and low pressure turbine is in the range of 2.63 to 4.27.

4. The turbine engine of any of claims 1 to 3, wherein said ratio of turbine section second portion stages to compressor section second portion stages is approximately 0.8.

5. The turbine engine of any preceding claim, wherein said turbine section second portion includes four stages and wherein said compressor section second portion includes five stages.

6. The turbine engine of any preceding claim, wherein said turbine section second portion includes a number of stages in the range of 3 to 5 and said compressor section second portion includes a number of stages in the range of 5 to 7.

7. The turbine engine of any preceding claim, wherein said turbine engine has a fan bypass ratio in the range of 11 to 17.

8. The turbine engine of any preceding claim, wherein said turbine engine has a fan bypass ratio in the range of 11.6 to 15.

9. The turbine engine of any preceding claim, wherein said turbine engine has a fan bypass ratio of approximately 11.7.

10. The turbine engine of any preceding claim, wherein said compressor section comprises a third portion, said turbine section comprises a third portion, and said second portion of the turbine section comprises a low pressure turbine that drives said fan via an epicyclic gear train geared architecture having a speed reduction greater than 2.3.

11. A method for validating a gas turbine engine comprising
determining a configuration complexity metric of a low pressure compressor and low pressure turbine in a gas turbine engine where a ratio of low pressure turbine stages to low pressure compressor stages is less than 1 by determining a weighted summation of a number of low pressure compressor stages and a number of low pressure turbine stages, wherein the complexity metric is defined as $[1+N]11+[1/Nx(S_{LPT})+Nx(S_{LPC})]]/[N+(S_{LPC})/(S_{LPT})]/[2N]$, where, $S_{LPT}$ is the number of low pressure turbine stages, $S_{LPC}$ is the number of low pressure compressor stages, and N is about 1.618034; and
validating said gas turbine engine when said configuration complexity is in the range of 2.63 to 4.27.

FIG.1

FIG.2A

FIG.2B

FIG.3A

FIG.3B

FIG.4

Europäisches
Patentamt

European
Patent Office

Office européen
des brevets

# EUROPEAN SEARCH REPORT

Application Number

EP 15 20 0058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/290211 A1 (KUPRATIS DANIEL BERNARD [US] ET AL) 2 October 2014 (2014-10-02)<br>* paragraph [0028] *<br>* paragraph [0042] *<br>* table 1 *<br>* paragraph [0015] *<br>* figures 1-3 * | 1-11 | INV.<br>F02C3/107<br>F02K3/075 |
| A | US 2013/192266 A1 (HOUSTON DAVID P [US] ET AL) 1 August 2013 (2013-08-01)<br>* figure 3 *<br>* claim 13 * | 1-11 | |
| A | US 2013/224003 A1 (KUPRATIS DANIEL BERNARD [US] ET AL) 29 August 2013 (2013-08-29)<br>* figure 4 *<br>* paragraph [0042] * | 1-11 | |

TECHNICAL FIELDS
SEARCHED (IPC)

F02C
F02K

The present search report has been drawn up for all claims

| Place of search | Date of completion of the search | Examiner |
|---|---|---|
| The Hague | 3 May 2016 | Burattini, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 20 0058

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2016

| Patent document cited in search report | | Publication date | Patent family member(s) | | Publication date |
|---|---|---|---|---|---|
| US 2014290211 | A1 | 02-10-2014 | EP | 2971648 A1 | 20-01-2016 |
| | | | US | 2014290211 A1 | 02-10-2014 |
| | | | WO | 2014163887 A1 | 09-10-2014 |
| US 2013192266 | A1 | 01-08-2013 | CA | 2857357 A1 | 08-08-2013 |
| | | | EP | 2809931 A1 | 10-12-2014 |
| | | | RU | 2014134792 A | 20-03-2016 |
| | | | SG | 11201403015W A | 26-09-2014 |
| | | | US | 2013192266 A1 | 01-08-2013 |
| | | | WO | 2013116262 A1 | 08-08-2013 |
| US 2013224003 | A1 | 29-08-2013 | EP | 2820250 A2 | 07-01-2015 |
| | | | SG | 11201404761T A | 26-09-2014 |
| | | | US | 2013224003 A1 | 29-08-2013 |
| | | | WO | 2013165515 A2 | 07-11-2013 |

EPO FORM P0459

For more details about this annex : see Official Journal of the European Patent Office, No. 12/82